Europäisches Patentamt

European Patent Office

Office européen des brevets

(11) Publication number: **0 096 568**
**A1**

(12) **EUROPEAN PATENT APPLICATION**

(21) Application number: **83303243.6**

(22) Date of filing: **06.06.83**

(51) Int. Cl.³: **G 01 V 3/10**

(30) Priority: **09.06.82 US 386546**

(43) Date of publication of application:
**21.12.83 Bulletin 83/51**

(84) Designated Contracting States:
**AT CH DE FR GB LI NL**

(71) Applicant: **DEERE & COMPANY**
**1 John Deere Road**
**Moline Illinois 61265(US)**

(72) Inventor: **Baker, Keith Ronald**
**2719 Edgemont Avenue**
**Waterloo Iowa 50702(US)**

(74) Representative: **Pears, David Ashley et al,**
**REDDIE & GROSE 16 Theobalds Road**
**London WC1X 8PL(GB)**

(54) **Metal detection system.**

(57) A housing 10 is open at both ends for the flow of material therethrough. Extending around the housing are a central primary coil 18 flanked by two secondary coils 20, 22 connected in series opposition. The primary coil is excited with an oscillatory signal which also provides a reference signal to a phase detector which detects a component of the signal across the secondary coils generated when there is conductive metal in the housing. The detected signal is differentiated to provide an indication only when there is moving metal. Conductive straps 12 and 14 are disposed either side of the coils to shield them from moving metal outside the housing.

*FIG. 2*

EP 0 096 568 A1

Croydon Printing Company Ltd.

## METAL DETECTION SYSTEM

The present invention relates to a metal detection system for detecting metal in material flowing along a path through a housing and comprising two secondary coils extending around the housing so that the material also flows through the coils, the coils being connected in series opposition.

Such a system is known from US 2 315 045 in which permanent magnets are used to establish a field through which the material flows, so that an out of balance signal is generated in the secondaries by moving metal. Unless such a field is employed it is not possible to detect non-ferromagnetic metal. However, permanent magnets are expensive and relatively heavy components.

Many other systems have been developed for detecting the presence of metal. For example, US 3,757,501 and US 3,972,156 relate to systems for detecting metal in a flow of crop material. These systems employ figure-of-eight coils which are mounted over an array of permanent magnets or an electromagnet coil next to a material flow path. Such systems can be expensive if permanent magnets are used and can also be insensitive to metal which may pass by too far away from the coils.

Various induction balance arrangements are also known which use phase detectors (US 3,020,470 and US 3,509,469). However, none of this prior art suggests a system of the type set forth in the first paragraph above which does not require permanent magnets but which is nevertheless sensitive to metal whether ferrous or non-ferrous anywhere within the flow path through the coils.

The system according to the invention is characterised in claim 1 below.

Shielding conducting straps are preferably mounted on either side of the coils. In the preferred embodiment the primary coil is excited by a fixed phase sinusoidal current. Moving metal within the housing induces a variable phase signal across the secondary coils. A switching synchronous detector receives a fixed phase reference signal and the induced signal and generates a phase dependent signal which has a low frequency component with a magnitude which depends upon the phase difference between the signals received by it. The phase dependent signal is differentiated and the differentiated signal is applied to an input of a comparator which turns on to energize a warning device when the differentiated signal exceeds a threshold level.

The invention will now be described in more detail, by way of example, with reference to the accompanying drawings, in which:

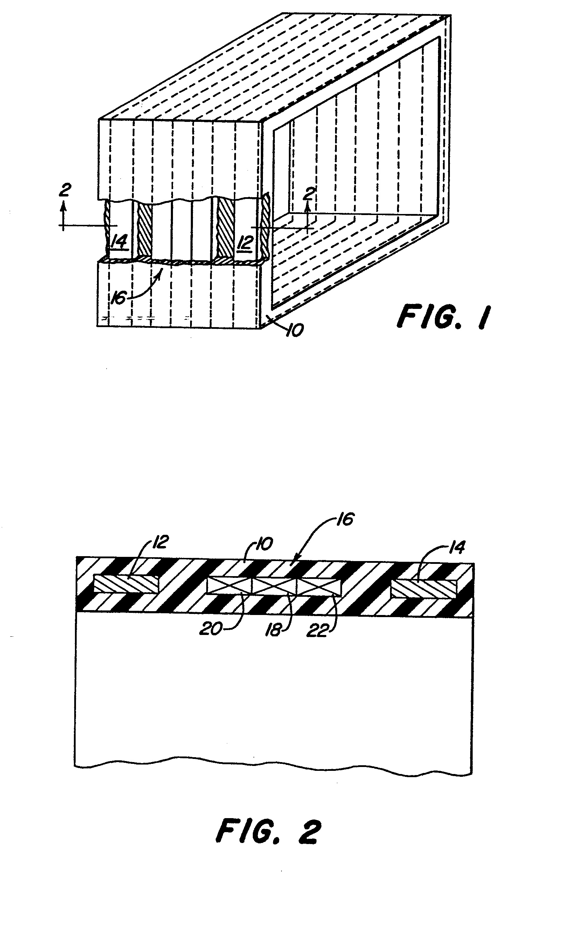

Fig 1 is an oblique view of a housing enclosing a material flow path, with a coil assembly and shorting straps constructed according to the present invention;

Fig 2 is a sectional view along lines 2-2 of Fig 1; and

Fig 3 is a schematic diagram of the signal processing circuit.

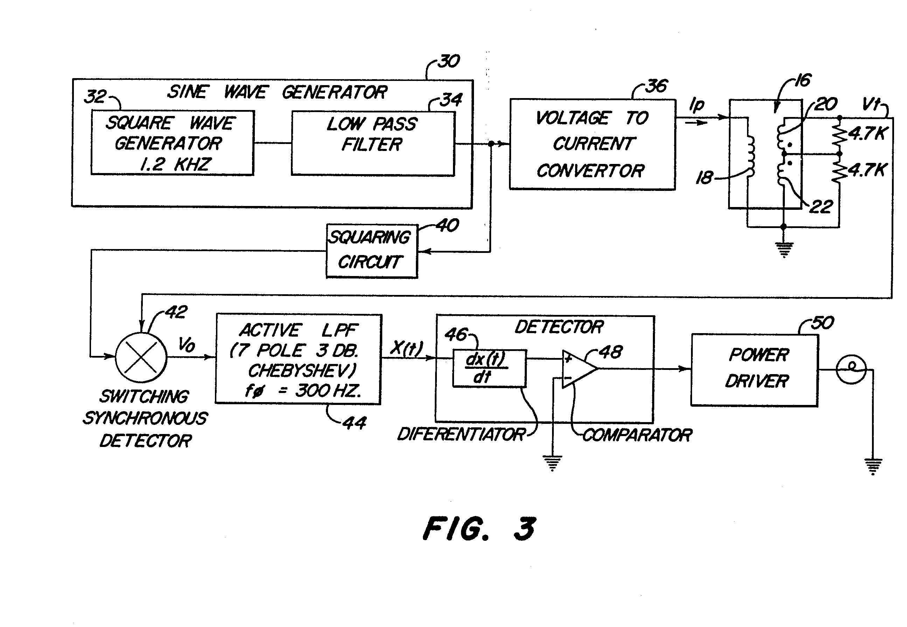

The metal detecting system includes a housing 10 which encloses a portion of a material flow path. The housing 10 is preferably formed out of a non-conducting material such as polyurethane. Embedded in the housing 10 are a pair of conducting shielding or shorting straps 12 and 14 which surround the flow path. Embedded in the centre of the housing 10, spaced apart from and between the straps 12 and 14, is a differential transformer-type coil assembly 16 with a primary coil 18 positioned between a pair of secondary coils 20 and 22, all surrounding the flow path. The secondary coils have the same number of turns and are connected to each other in series-opposition, as indicated in Fig 3.

Also referring now to Fig 3, the metal detecting system 10 includes a circuit 30 coupled to the coil assembly 16. The circuit 30 comprises a 3 to 4 volt peak-to-peak amplitude sine wave generator 32 which includes a 1.2 kHz square wave generator 34 and an active low pass filter 36, such as 4 pole Chebyshev-type filter with a 1 db ripple and a cut-off frequency of preferably 1.5 kHz, for example. This type of filter has a sharp response so that the amplitude of harmonics is reduced and the filter output is substantially a pure sine wave of 1.2 kHz frequency which is relatively insensitive to supply voltage variations or temperature variations. The output of the filter 34 is converted by a unity gain voltage-to-current converter 36 which produces an excitation current Ip, which is applied to the primary coil 18.

Normally, with no metal present inside the housing 10, the induced voltage across the secondary coils 20 and 22 leads the excitation current Ip by 90° and since the coils 20 and 22 are anti-phased, the induced voltage is normally a minimum. However, the introduction of metal within the housing 10 unmatches the coupling between the primary and the secondary coils, thus producing a small, but finite, induced voltage Vt across the coils 20 and 22. The shorting straps 12 and 14 reduce the sensitivity of this coil arrangement to moving metal outside the flow path, such as moving machinery parts located in the vicinity of the housing 10.

A squaring circuit 40, preferably a low hysteresis Schmitt trigger, converts the sine wave output of the filter 34 to a 1.2 kHz square wave reference signal. A switching synchronous detector 42 receives the induced voltage Vt and the reference signal. The detector 42 measures changes in the coupling of the coils. The detector 42 samples the voltage Vt alternately with gains of +A and -A in equal increments of time corresponding to half cycles of the square wave reference signal. The voltage Vo at the output of the detector 42 will thus have a d.c. component X(t) which is proportional to the cosine of the phase angle between the square wave output of the squaring circuit 40 and the induced voltage Vt.

This d.c. phase dependent component X(t) is passed by a low pass filter 44, such as an active seven pole Chebyshev filter with a 3 db ripple and a cut-off frequency of 300 Hz, to a differentiator 46. The differentiator 46 produces an output signal only in response to changes in the X(t) signal, and is thus responsive only to the presence of metal which is moving through the housing 10, as opposed to metal which is stationary with respect to the coil assembly 16.

The output of the differentiator 46 is coupled to an input of a comparator 48, whose output goes high when the output of the differentiator 46 goes sufficiently positive. The high output condition of comparator 48 turns on a power driver 50 which energizes a warning device to give an indication of the presence of moving metal within the housing 10 and coil assembly 16.

CLAIMS

1.    A metal detection system for detecting metal in material flowing along a path through a housing (10) and comprising two secondary coils (20, 22) extending around the housing so that the material also flows through the coils, the coils being connected in series opposition, characterised in that the secondary coils (20, 22) are disposed on either side of a primary coil (18) excited with an oscillatory signal and by a phase detector (42) responsive to a reference signal having a fixed phase relative to the exciting signal and the output signal (Vt) of the series-connected secondary coils to provide a detection signal (X(t)), and by a differentiator (46) providing an output signal from the detection signal.

2.    A system according to claim 1, characterised by two shorting straps (12, 14) also extending around the housing one on either side of the coils (18, 20, 22) so that the material flows in turn through one shorting strap (12), one secondary coil (20), the primary coil (18), the second secondary coil (22) and the second shorting strap (14).

3.    A system according to claim 1 or 2, characterised in that the reference signal is a square-wave signal and the phase detector (42) is a switching synchronous detector.

4.    A system according to claim 1, 2 or 3, characterised by a source (30) of a sine-wave excitation signal and a voltage-to-current converter (36) driving the primary coil (18) in response to this excitation signal.

5.    A system according to claim 4, characterised in that the reference signal is a square-wave signal derived from the excitation signal by a trigger circuit (40) producing a square wave output.

6.     A system according to any of claims 1 to 5, characterised by a low-pass filter (44) between the phase detector (42) and the differentiator (46).

7.     A system according to claim 6, characterised in that the low-pass filter (44) is an active seven-pole Chebyshev filter.

8.     A system according to any of claims 1 to 7, characterised by a comparator (48) connected to the differentiator (46) to provide an output signal when the differentiator output signal exceeds a predetermined level.

*FIG. 1*

*FIG. 2*

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DE-A-1 548 159 (ELEKTRONIK-APPARATEBAU) * Page 1, line 7 - page 2, line 23; page 7, lines 8-19 * | 1 | G 01 V 3/10 |
| Y | US-A-4 012 690 (S. HEYTOW) * Abstract; figures 1,7 * | 1,2 | |
| Y | CARNAHAN CONFERENCE ON ELECTRONIC CRIME COUNTERMEASURES, 25th-27th April 1973, pages 72-74 V.R. STURDIVANT: "Parcel inspection system" * Page 72, column 1, line 24 - column 2, line 15; page 73, column 1, lines 1-37; figure 2 * | 1,3,4, 6 | |
| A | GB-A- 501 581 (INTERNATIONAL CIGAR MACHINERY) | | TECHNICAL FIELDS SEARCHED (Int. Cl. 3) G 01 V 3/10 |
| A | US-A-3 826 973 (N.C. PFLAUM) | | |

The present search report has been drawn up for all claims

| Place of search | Date of completion of the search | Examiner |
|---|---|---|
| THE HAGUE | 24-09-1983 | HAASBROEK J.N. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82